# EUROPÄISCHE PATENTSCHRIFT

(11) **EP 1 440 259 B1**
(45) Veröffentlichungstag und Bekanntmachung des Hinweises auf die Patenterteilung: **13.12.2006**
(21) Anmeldenummer: 02782994.4
(22) Anmeldetag: 24.10.2002
(51) Int. Cl.: F16H 63/20

(54) **SCHALTEINRICHTUNG FÜR EIN HANDSCHALTGETRIEBE**
SWITCHING DEVICE FOR MANUAL GEARSHIFT
DISPOSITIF DE COMMUTATION POUR CHANGEMENT DE VITESSE MANUEL

(30) Priorität: 31.10.2001 DE 10153634
(43) Veröffentlichungstag der Anmeldung: 28.07.2004
(73) Patentinhaber: GETRAG Getriebe- und Zahnradfabrik Hermann Hagenmeyer GmbH & Cie KG, 74199 Untergruppenbach (DE)
(72) Erfinder: SCHÄFER, Andreas, 74232 Abstatt (DE); PÖSCHL, Martin, 74831 Gundelsheim (DE); BURGBACHER, Martin, 78050 Villingen-Schwenningen (DE)
(74) Vertreter: Steil, Christian
(86) Internationale Anmeldenummer: PCT/EP2002/011876
(87) Internationale Veröffentlichungsnummer: WO 2003/038317

(56) Entgegenhaltungen:
- DE-A- 19 951 683
- US-A- 3 513 717

## Beschreibung

Die vorliegende Erfindung betrifft eine Schalteinrichtung für ein Getriebe in Längsbauweise, mit
- einer Schaltwelle, die bei Wählbewegungen gedreht und bei Schaltbewegungen axial versetzt wird,
- einer Mehrzahl von Schaltgliedern, die jeweils zur Betätigung wenigstens einer zugeordneten Schaltkupplung in Axialrichtung beweglich oder verschwenkbar gelagert sind,
- einer Mehrzahl von Schaltfingern, die an der Schaltwelle festgelegt sind und sich jeweils zu einer Seite hin erstrecken, wobei jeder Schaltfinger einem der Schaltglieder zugeordnet und so angeordnet ist, dass er in einer bestimmten Wähldrehstellung der Schaltwelle mit seinem zugeordneten Schaltglied axial gekoppelt ist, um das Schaltglied bei einer Axialbewegung der Schaltwelle mitzunehmen, und
- einer Sperreinrichtung zum Verhindern, dass zwei oder mehr Gänge des Getriebes gleichzeitig geschaltet werden, die eine Mehrzahl von gehäusefest gelagerten einzelnen Sperrelementen aufweist, wobei die Sperrelemente jeweils zwischen einem zugeordneten Schaltglied und einem mit der Schaltwelle fest verbundenen Sperrglied wirken.

Eine derartige Schalteinrichtung ist bekannt aus der US-A-3,513,717.

Die Erfindung betrifft generell eine Schalteinrichtung zur Betätigung eines Handschaltgetriebes in Inline-Bauweise (inkl. Inline-Transaxle) mit einer Vorrichtung zum Verhindern, dass mehrere Gänge gleichzeitig geschaltet werden können und einer Rastierung für die einzelnen Schaltschwingen/-gabeln.

Auf dem Gebiet der Schalteinrichtungen für Getriebe, insbesondere der Getriebe für Kraftfahrzeuge, werden die einzelnen Schaltglieder (Schaltgabeln oder Schaltschwingen) häufig mittels mehrerer Schaltstangen betätigt. Dies ist beispielsweise aus der DE 29 35 590 C2 bekannt.

Als Sperreinrichtung für eine Mehrzahl von Schaltstangen ist es bekannt, einen Sperrschieber quer zur Erstreckung der Schaltstangen zu bewegen (DE 37 30 230 C1).

Aus der DE 199 51 683 A1 ist eine Schalteinrichtung für ein Kraftfahrzeuggetriebe bekannt, bei der an einer zentralen Schaltwelle eine Mehrzahl von Schaltfingern vorgesehen ist, die mit jeweiligen Schaltgliedern axial formschlüssig koppelbar sind.

Als Sperreinrichtung dient ein parallel zur Schaltwelle angeordnetes Sperrblech, das insgesamt in einer Richtung quer zur Schaltwelle verschieblich gelagert ist. Das Sperrblech ist hierzu mit einem Koppelhebel verbunden, der drehfest an der Schaltwelle festgelegt ist. An den Schaltgliedern sind jeweilige Sperrelemente vorgesehen, die in einer Sperrstellung in jeweilige Nuten des Sperrbleches greifen. Wenn ein Schaltglied angewählt ist, durch Drehbewegung der Schaltwelle, gibt das Sperrblech das Sperrelement dieses Schaltgliedes frei, so dass sich das Schaltglied axial verschieben oder verschwenken lässt. In jener Drehstellung der Schaltwelle greifen die Sperrelemente der anderen Schaltglieder jeweils in eine zugeordnete Nut des Sperrbleches und sind folglich axial fixiert, so dass ein Einlegen der zugeordneten Gänge verhindert wird.

Nachteilig ist hierbei die aufwändige Kopplung zwischen Schaltwelle und Sperrblech sowie die aufwändige Lagerung des Sperrbleches.

Aus der DE 43 42 957 A1 sind zwei Ausführungsformen von Sperreinrichtungen bekannt.

Bei einer Ausführungsform dieses Standes der Technik sind einzelne Sperrelemente in Form von Sperrbohnen an den Schaltgliedern gelagert. Die Sperrelemente sind in einem Sperrzustand mittels jeweiliger Koppelglieder an der Schaltwelle in Ausnehmungen in das Getriebegehäuse gedrückt, gegen Federvorspannung. Sofern ein Schaltglied angewählt ist, ist das zugeordnete Koppelglied in eine solche Drehstellung gebracht, dass das Sperrelement mittels der Federvorspannung in eine Ausnehmung des Koppelgliedes eindringen kann, um so die formschlüssige Kopplung zwischen Getriebegehäuse und Schaltglied freizugeben.

Bei einer zweiten Ausführungsform dieses Standes der Technik ist eine Mehrzahl von einzelnen Sperrelementen an dem Getriebegehäuse gelagert und in eine Richtung auf die Schaltwelle zu elastisch vorgespannt. Jedem der Schaltglieder ist ein Koppelglied an der Schaltwelle zugeordnet. Das Koppelglied weist zum einen einen Schaltfinger zum Eingreifen in eine Schaltgabel des jeweiligen Schaltgliedes auf. Auf der entgegengesetzten Seite weisen die Koppelelemente jeweils eine Axialnut auf sowie eine von der Axialnut ausgehende Vertiefung. In einem Sperrzustand greifen die Sperrelemente jeweils in die Vertiefungen ein und fixieren so die Koppelelemente. Durch Drehen der Schaltwelle drücken zugeordnete Mitnahmeteile an der Schaltwelle das freizugebende Sperrelement aus der Vertiefung heraus, so dass es in der Axialnut frei beweglich ist. Gleichzeitig nimmt das Mitnahmeteil das angewählte Koppelelement bei einer Axialbewegung mit, so dass das dem Koppelelement zugeordnete Schaltglied von der Schaltwelle axial mitgenommen wird.

Bei beiden Ausführungsformen sind die Koppelelemente kompliziert herzustellen und das Getriebegehäuse muss speziell für die Lagerung der Sperrelemente vorbereitet werden.

Aus der DE 199 01 056 A1 ist ein der zweiten Ausführungsform der DE 43 42 957 A1 ähnliches Schaltsystem bekannt. Im Unterschied hierzu sind die Axialnuten der Koppelelemente mit Rastvertiefungen versehen, so dass die Sperrelement nicht lediglich zur Sperrung, sondern auch zur Rastierung in den jeweiligen Schaltstellungen dienen. Insgesamt weist der Stand der Technik jeweils wenigstens einen der folgenden Nachteile auf:
- Aufwändige Mechanik zum Sperren
- Reibung zwischen Schalt- und Sperrelement zusätzlich zur Reibung der Rastierungen
- Zusammenführung einer formschlüssigen Verbindung zu den Schaltschwingen /-gabeln in eine Ebene nötig
- Gehäusebohrungen für Sperrelemente
- Gehäusebohrungen für Rastelemente
- Zusätzliche Sperr-/Rastkonturen auf den Schaltschwingen /- gabeln nötig .
- Je nach System kann nur bei der Schalt- oder Wählbewegung gesperrt werden
- Gänge, die durch die Einwirkung äußerer Kräfte eingelegt wurden (z.B. beim Transport) und durch die Schaltwelle nicht angewählt sind, lassen sich nicht mehr auslegen.

Es ist daher die Aufgabe der vorliegenden Erfindung, eine verbesserte Schalteinrichtung für ein Getriebe in Längsbauweise anzugeben.

Diese Aufgabe wird bei der eingangs genannten Schalteinrichtung für ein Getriebe in Längsbausweise dadurch gelöst, dass die Sperrelemente an einer an einem Gehäuse des Getriebes festgelegten Trägerschiene in einer Richtung quer zur Erstreckung der Schaltwelle beweglich gelagert sind und dass die Sperrelemente an der Trägerschiene elastisch vorgespannt gelagert sind.

Durch die fest mit der Schaltwelle verbundenen Sperrglieder kann die Sperreinrichtung über die vorhandene Schaltwelle betätigt werden. Es ergibt sich eine einfache Konstruktion mit wenigen Teilen und geringen bewegten Massen. Die Konstruktion ist ferner sowohl für Schaltgabeln als auch Schaltschwingen gleichermaßen geeignet. Ferner kann generell entweder mit der Schalt- oder der Wählbewegung gesperrt werden.

Es ist möglich, die Sperrelemente gemeinsam mit der Trägerschiene als vormontierte Einheit in dem Getriebe zu montieren. Die Maßnahmen zur Lagerung der Trägerschiene an dem Gehäuse sind deutlich weniger aufwändig als eine Lagerung einzelner Sperrelemente unmittelbar an dem Getriebegehäuse.

Durch die elastische Vorspannung wird zum einen eine definierte Lage der Sperrelemente erreicht. Zum anderen kann die elastische Vorspannung dazu genutzt werden, eine Rastierungsfunktion für die einzelnen Schaltpositionen (in der Regel drei Positionen, nämlich neutral, Schaltposition einer ersten Schaltkupplung einer Schaltkupplungseinheit und Schaltposition einer zweiten Schaltkupplung der Schaltkupplungseinheit) einzurichten.

Dabei ist es besonders bevorzugt, wenn ein Schaltfinger und ein zugeordnetes Sperrglied jeweils durch ein einzelnes, an der Schaltwelle festgelegtes Koppelglied gebildet sind.

Bei dieser Ausführungsform wird die Teileanzahl noch weiter reduziert und es ergibt sich ein konstruktiv einfacher Aufbau.

Dabei ist es bevorzugt, wenn die Sperrglieder sich jeweils von der Schaltwelle in die dem zugeordneten Schaltfinger entgegengesetzte Richtung erstrecken.

Hierdurch ist die Schaltwelle zum einen besser ausbalanciert. Zum anderen wird der in dem Getriebe vorhandene Raum optimal ausgenutzt, insbesondere dann, wenn die Schaltwelle zentral über den Schaltgliedern angeordnet ist.

In einer konstruktiv besonders günstigen Ausgestaltung sind die Sperrelemente jeweils mit einer Feder verbunden, wobei die Federn der Sperrelemente jeweils an der Trägerschiene angreifen.

Hierdurch wird auch die Vorspannfunktion in die Einheit aus Trägerschiene und Sperrelementen integriert, so dass auch die Federn innerhalb dieser vormontierbaren Einheit in das Getriebe einbaubar sind.

Insgesamt ist es von Vorteil, wenn die Sperrelemente an ihren Enden jeweils an einer Kontur des zugeordneten Schaltgliedes bzw. an einer Kontur des zugeordneten Sperrgliedes angreifen, wobei die Konturen so aufeinander abgestimmt sind, dass die Sperrelemente die jeweils nicht angewählten Schaltglieder axial formschlüssig fixieren.

Dabei kann vorteilhafterweise vorgesehen werden, dass ein unmittelbarer Kontakt zwischen den Sperrelementen und den jeweiligen Sperrgliedern vermieden wird durch die elastische Vorspannung der Sperrelemente. Hierdurch lassen sich Wählbewegungen der Schaltwelle reibungsarm durchführen.

Besonders bevorzugt ist es dabei, wenn die Sperrelemente mittels der elastischen Vorspannung generell in eine Sperrnut des Schaltgliedes vorgespannt sind, um gleichzeitig eine Rastierungsfunktion für die Neutralposition des Schaltgliedes einzurichten. Eine Axialbewegung des Schaltgliedes ist ausgehend aus dieser Position dann nur möglich, wenn die Kontur des Sperrgliedes aufgrund der gewählten Drehstellung der Schaltwelle dies zulässt, so dass die Sperrelemente in Richtung hin zu dem Sperrglied ausweichen können.

Insgesamt ist es ferner von Vorteil, wenn die Schaltglieder jeweils einen Gabelabschnitt mit einem ersten Arm und einem zweiten Arm aufweisen, wobei jeweils der erste Arm mit dem zugeordneten Schaltfinger axial formschlüssig koppelbar ist, und wobei die Sperrelemente jeweils zwischen dem zweiten Arm des Schaltgliedes und dem Sperrglied wirken.

Hierdurch wird eine optimale Raumausnutzung innerhalb des Getriebes erzielt.

Dabei ist es nicht notwendig, dass die Sperrelemente unmittelbar an dem Schaltglied angreifen. Vielmehr kann an dem Schaltglied auch ein damit fest verbundenes Element vorgesehen sein. Dies kann insbesondere hilfreich sein bei der Verwendung von standardisierten Schaltgliedern.

Ferner versteht sich, dass der Schaltfinger nicht notwendigerweise als einzelner Finger ausgebildet sein muss. Vielmehr kann es sich bei dem Schaltfinger auch um eine Gabel handeln. Entscheidend ist, dass eine axiale Mitnahmefunktion zwischen Schaltfinger und Schaltglied erzielbar ist.

Insgesamt wird mit der erfindungsgemäßen Schalteinrichtung mindestens eines der folgenden Lösungsmerkmale realisiert:
- Betätigung der Sperreinrichtung durch die zentrale Schaltwelle mit den Schaltfingern
- Sperrung in der Schaltmuffenebene
- Vorzugsweise Kombination von Sperr- und Rastfunktion
- Vorzugsweise komplett vorgefertigte Einheit
- Vorzugsweise wird Sperrelement mittels Feder von der Schaltwelle weggedrückt

Insgesamt wird mit der erfindungsgemäßen Schalteinrichtung wenigstens einer der folgenden Vorteile erzielt:
- Betätigung der Sperreinrichtung über die vorhandene Schaltwelle mit den Schaltfingern
- Es kann mit der Schalt- oder Wählbewegung gesperrt werden
- Für Schaltgabeln und Schaltschwingen gleichermaßen geeignet
- Kombination aus Sperr- und Rastierfunktion möglich
- Einfache Konstruktion mit wenigen Teilen und geringen bewegten Massen
- In der Regel keine Reibung zwischen Schaltwelle und Sperrelement (Sperrbohne)

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Draufsicht auf einen Ausschnitt einer erfindungsgemäßen Schalteinrichtung, wobei die Schaltwelle das gezeigte Schaltglied angewählt hat, sich jedoch in einer Leerlaufstellung befindet;
- Fig. 2: eine der Fig. 1 entsprechende Ansicht, wobei die Schaltwelle in einem Zustand einer ersten Schaltposition des zugeordneten Schaltgliedes gezeigt ist;
- Fig. 3: eine Schnittansicht des in Fig. 2 gezeigten Abschnitts der erfindungsgemäßen Schalteinrichtung;
- Fig. 4: eine Draufsicht auf einen anderen Abschnitt der Schalteinrichtung, wobei der gleiche Zustand der Schaltwelle gezeigt ist, jedoch ein anderes Schaltglied dargestellt ist, das in diesem Fall gegenüber Axialbewegungen gesperrt ist; und
- Fig. 5: eine Schnittansicht des in Fig. 4 gezeigten Abschnittes der Schalteinrichtung.

Die im folgenden beschriebene Schalteinrichtung für manuell betätigte Schaltgetriebe in Inline-Bauweise (inkl. Inline-Transaxle) besitzt eine Sperreinrichtung 8-16, 22, die verhindert, dass mehrere Gänge gleichzeitig geschaltet werden können. Diese Vorrichtung 8-12, 22 dient in einer bevorzugten Ausgestaltung gleichzeitig dazu, die Schaltschwingen/-gabeln 6 in ihrer Neutrallage zu rastieren.

Bei den bisher bekannten Systemen dienen unabhängige Elemente zum Sperren bzw. zum Rastieren der Schaltschwingen/-gabeln 6. Es müssen mehrere Öffnungen im Gehäuse angebracht werden, an den Schaltschwingen/-gabeln sind verschiedene Rast-/Sperrkonturen nötig und an mehreren Stellen tritt Reibung auf.

Die erfindungsgemäße Schalteinrichtung besteht aus einer zentralen Schaltwelle 2, mehreren Schaltschwingen oder -gabeln 6 (eine pro Synchroneinheit) und je einem Sperrelement (Sperrbohne) 12 pro Schaltschwinge/-gabel 6. Die Sperrbohnen 12 sind vorzugsweise in einer gehäusefesten Trägerschiene 8 eingelegt. Alternativ können die Sperrelemente 12 auch unmittelbar am Gehäuse des Getriebes gelagert sein.

Die zentrale Schaltwelle 2 trägt zur Betätigung pro Schaltschwinge/-gabel 6 je einen Schaltfinger 20. Diese Schaltfinger 20 greifen, je nach Drehlage der Schaltwelle 2, in entsprechende Rachen 34 auf den Schaltschwingen/-gabeln 6 ein.

Die Schaltwelle 2 besitzt vorzugsweise vier Schaltfinger 20, kann dann also vier Schwingen 6 oder Gabeln betätigen wie es z.B. für ein 6-Ganggetriebe nötig ist.

Parallel zur Schaltwelle 2 liegt im Getriebegehäuse vorzugsweise die Trägerschiene 8. Diese Trägerschiene 8 führt in Bohrungen für jede Schaltschwinge/-gabel 6 jeweils eine Sperrbohne 12 und lagert eine Blattfeder 10. Diese Blattfeder 10 drückt die jeweilige Sperrbohne 12 über einen Sicherungsring 15 von der Schaltwelle 2 weg nach außen in eine Kontur 14 der Schaltschwinge/-gabel 6. Eine solche Kontur 14 muss an allen Schaltgliedern 6 (Schaltschwingen/-gabeln) vorhanden sein. Die Kontur 14 kann unmittelbar an dem jeweiligen Schaltglied 6 oder an einem hieran festgelegten Element vorgesehen sein. Diese Rast-/Sperrkontur 14 dient, wie der Name schon sagt, vorteilhafterweise nicht nur dem Sperrzweck. Da diese Kontur 14 an jedem Schaltglied 6 vorhanden ist, wird sie vorteilhafterweise gleichzeitig als Rastkontur verwendet. Wie es in Bild 1 zu sehen ist, ist die Rastkontur im Längsschnitt etwa W-förmig realisiert, also drei Rastvertiefungen für eine Mittelstellung (Bild 1), sowie für zwei Schaltstellungen für zwei Schaltkupplungen eines Synchronpaketes.

Es versteht sich, dass bei Verwendung eines Schaltgliedes 6 für ein Synchronpaket mit nur einer einzelnen Schaltkupplung auch nur zwei Rastvertiefungen (für eine Mittelstellung sowie für die Schaltstellung) vorgesehen sein können.

Ferner ist zu erkennen, dass der Schaltfinger 20 sich von einem dreh- und verschiebefest mit der Schaltwelle verbundenen Koppelglied 4 erstreckt. In die entgegengesetzte Seite erstreckt sich von dem Koppelglied 4 ein einstückig hiermit verbundenes Sperrglied 22, das dazu ausgelegt ist, mit dem Sperrelement 12 zusammenzuwirken.

In der vorliegenden Darstellung wird das Koppelglied 4 als ein Element mit einem Schaltfinger 20 und einem Sperrglied 22 beschrieben. Es versteht sich jedoch, dass das Koppelglied 4 auch insgesamt als Schaltfinger mit einem ersten Ende 20 und einem zweiten Ende 22 bezeichnet werden kann.

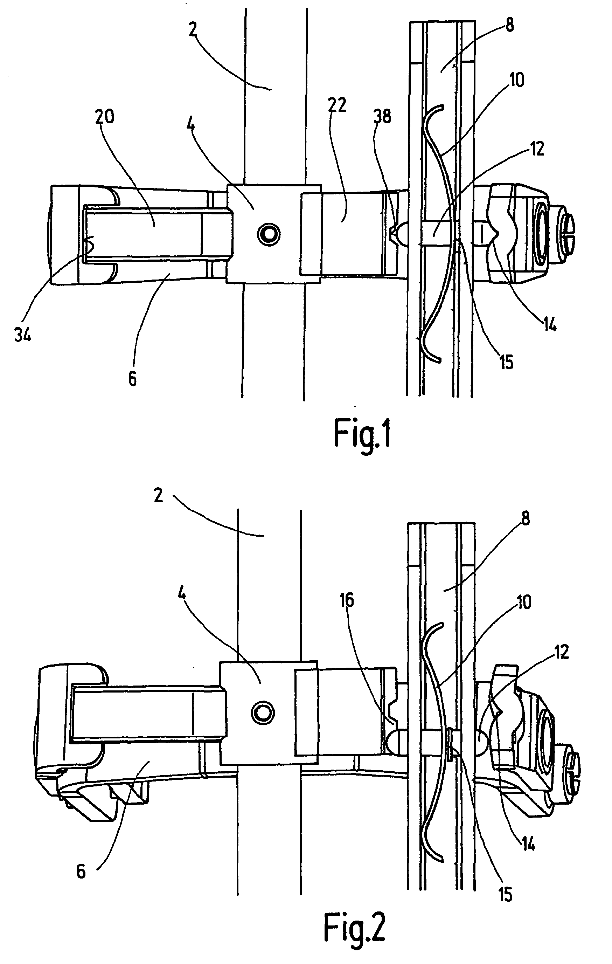

Fig. 1 zeigt einen Ausschnitt der Schaltung, in dem die Schaltwelle 2 in Neutralposition dargestellt ist, in einer perspektivischen Darstellung von oben. Man erkennt in der Mitte die Schaltwelle 2 mit einem Schaltfinger 20 und eine zugeordnete Schaltschwinge 6 mit ihrer Rast-/Sperrkontur 14. Auf der einen Seite (links) ist zu erkennen, dass der Schaltfinger 20 mit einem Schaltrachen 34 der Schaltschwinge 6 ausgerichtet ist. Rechts liegt die Trägerschiene 8 (parallel zu der Schaltwelle 2) mit einer Sperrbohne 12, einer Blattfeder 10 und dem dazugehörenden Sicherungsring 15. Die Blattfeder 10 drückt hier die Sperrbohne 12 in die Rast-/Sperrkontur 14 der Schaltschwinge 6, so dass diese in ihrer Mittellage über die Federkraft rastiert ist.

In dieser Stellung kann die Schaltwelle 2 frei gedreht werden, ohne dass Reibung zwischen der Sperrbohne 12 und der Schaltwelle 2 mit dem Sperrglied 22 auftritt, da sich zwischen der Sperrbohne 12 und dem Sperrglied 22 Luft befindet. Zu diesem Zweck ist in dem Sperrglied 22 vorzugsweise ein v-förmiger radialer Ausschnitt 38 vorgesehen.

In Fig. 2, dessen Darstellung Fig. 1 entspricht, ist ein Gang, der über die dargestellte Schwinge 6 betätigt wird, geschaltet worden. Die Schaltwelle 2 hat sich mit ihrem Schaltfinger 20 in Längsrichtung bewegt und der Schaltfinger 20 hat die Schaltschwinge 6 in axialer Richtung geschwenkt. Durch diese Schwenkbewegung wurde die Sperrbohne 12 durch die Rast-/Sperrkontur 14 auf der Schaltschwinge 6 gegen die Blattfeder 15 in Richtung Schaltwelle 2 bzw. Sperrglied 22 bewegt. Eine axiale Aussparung 16 an dem Sperrglied 22 ermöglicht der Sperrbohne 12 diese Bewegung.

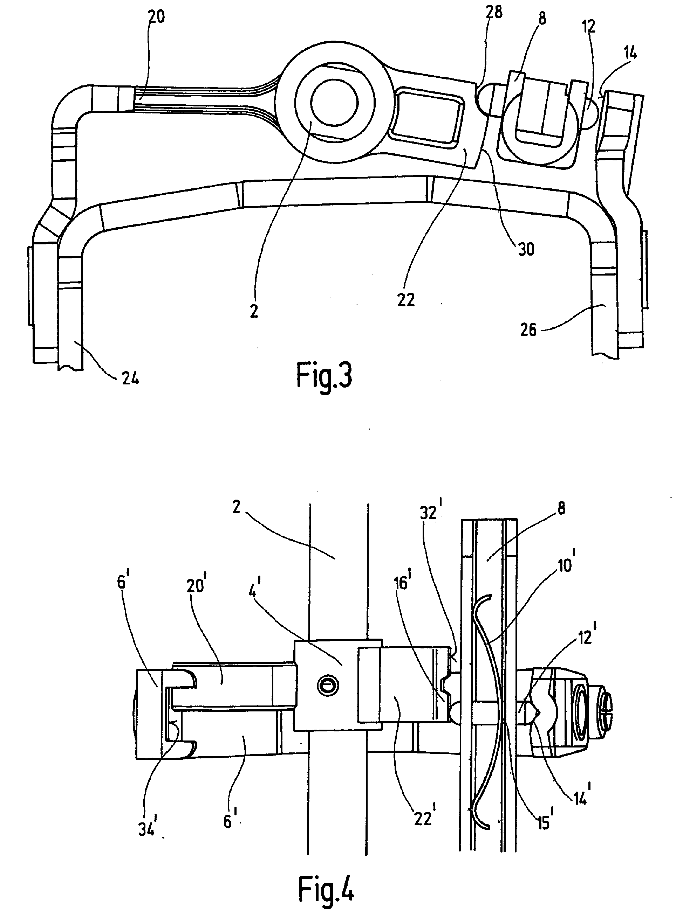

Fig. 3 zeigt den geschalteten Zustand in einer schematischen Schnittansicht von der Seite.

Es versteht sich, dass bei der in den Fig. 2, 3 gezeigten Drehstellung der Schaltwelle 2 alle nicht gezeigten Schaltglieder 6 (Schaltgabeln oder Schaltschwingen) gesperrt sind, wie es nachstehend in Fig. 4 gezeigt ist. Folglich wird verhindert, dass zwei Gänge gleichzeitig eingelegt werden.

In Fig. 4 ist ein Gang eingelegt worden, der durch eine andere als die dargestellte Schwinge 6' betätigt wird. Das bedeutet, die Schaltwelle 2 wurde gegenüber Fig. 2, 3 in eine andere Gasse gedreht und längs verschoben. In diesem Zustand greift der dargestellte Schaltfinger 20' nicht in den Rachen 34' der dargestellten Schaltschwinge 6' ein und kann sie nicht in Axialrichtung schwenken. Die Blattfeder 15' drückt weiterhin die Sperrbohne 12' in die Rast-/Sperrkontur 14' der Schaltschwinge 6'. In dieser Stellung liegt die axiale Aussparung 16' in der Radialkontur 32' des Sperrgliedes 22' nicht mehr gegenüber der Sperrbohne 12' und das Sperrglied 22' verhindert, dass sich die Sperrbohne 12' Richtung Schaltwelle 2 bewegen kann.

Da die Sperrbohne 12' durch das Sperrglied 22' blockiert wird, kann sich die Schaltschwinge 6' auch nicht bewegen, da sich dazu die Sperrbohne 12' aus der Rast-/Sperrkontur 14' heraus bewegen müsste. Auf diese Weise ist verhindert, dass ein anderer als der gewählte Gang eingelegt wird.

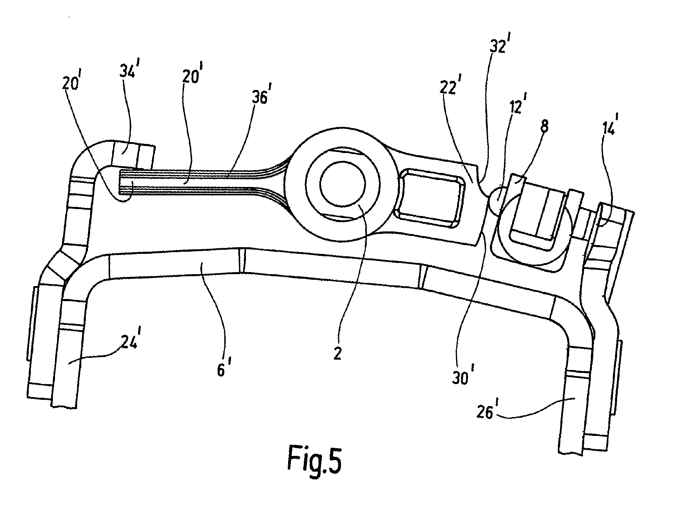

Fig. 5 zeigt eine Querschnittsansicht der in Fig. 4 gezeigten Anordnung, geschnitten parallel zur Schaltschwingenebene. Die Schaltwelle 2 ist in eine solche Stellung gedreht, dass der Schaltfinger 20' nicht in den Rachen 34' des Schaltgliedes 6' greift. Das gezeigte Schaltglied 6' ist folglich nicht angewählt und ist ferner gegenüber einer Axialbewegung gesperrt. Das Sperrelement (Sperrbohne) 12' greift in die Rastkontur 14' des Schaltgliedes 6'. Das dem Rachen 34' des Schaltgliedes 6' gegenüberliegende Sperrglied 22' ist mit der Radialkontur 32' versehen. In der gezeigten Sperrstellung liegt ein Sperrabschnitt 30' der Radialkontur 32' dem Sperrelement 12' so gegenüber, dass dieses nicht aus der Rastkontur 14' des Schaltgliedes 6' ausgelenkt werden kann. Ein axiales Bewegen des Schaltgliedes 6' ist unmöglich.

Die Anordnung aus Trägerschiene 8 und daran elastisch vorgespannt gelagerten Sperrelementen (Sperrbohnen) 12 kann als eine Einheit vormontiert und anschließend insgesamt in einem Arbeitsschritt in dem Getriebe montiert werden.

Alternativ hierzu ist es auch denkbar, die Trägerschiene 8 als Teil des Getriebegehäuses auszubilden. In diesem Fall würden die Sperrelemente 12 einzeln an dem betreffenden Gehäuseteil montiert werden.

Die in der dargestellten Ausführungsform realisierte elastische Vorspannung der Sperrelemente 12 mittels Blattfedern 10 kann durch jede Art von elastischer Vorspannung ersetzt werden, beispielsweise mittels Schraubenfedern, Gummielemente oder elastomere Elemente etc.

Das Koppelglied 4 mit demSchaltfinger (Mitnehmer) 20 ist drehfest an der Schaltwelle 2 festgelegt. Es ist vorzugsweise einteilig ausgebildet, kann aber auch mehrteilig ausgebildet sein.

In der dargestellten Ausführungsform ist durch den radialen V-Ausschnitt 38, der senkrecht verläuft zu der axialen Aussparung 16, in allen Wählstellungen innerhalb der Wählgasse (also im neutralen Zustand des Getriebes) Luft (Spiel) zwischen Sperrelement 12 und Sperrglied 22 vorgesehen. Daher können Wählbewegungen innerhalb der Wählgasse - von Hand - ausgeführt werden, ohne dass durch die Sperreinrichtung eine Gegenkraft aufgrund von Reibung erzeugt wird. Das spielfreie Sperren erfolgt erst mit der Schaltbewegung, wenn nämlich der Sperrabschnitt 30 hinter die Sperrbohne 12 gezogen wird.

Alternativ ist es auch möglich, auf ein derartiges Spiel zu verzichten, bspw., indem kein V-Ausschnitt vorgesehen wird und die Sperrbohne 12 im wesentlichen spielfrei an der Radialkontur 32 des Sperrgliedes 22 anliegt. Dann erfolgt das Sperren bereits mit der Wählbewegung.

Die Sperreinrichtung ist für jede Art von Schaltglied 6 geeignet, einschließlich Schaltschwingen 6 und auf Schaltstangen geführte Schaltgabeln.

Unter einer Axialbewegung eines Schaltgliedes 6 ist vorliegend sowohl ein axiales Verschieben einer Schaltgabel als auch ein Verschwenken einer Schaltschwinge 6 zu verstehen.

## Patentansprüche

1. Schalteinrichtung für ein Getriebe in Längsbauweise, mit
- einer Schaltwelle (2), die bei Wählbewegungen gedreht und bei Schaltbewegungen axial versetzt wird,
- einer Mehrzahl von Schaltgliedern (6), die jeweils zur Betätigung wenigstens einer zugeordneten Schaltkupplung in Axialrichtung beweglich oder verschwenkbar gelagert sind,
- einer Mehrzahl von Schaltfingern (20), die an der Schaltwelle (2) festgelegt sind und sich jeweils zu einer Seite hin erstrecken, wobei jeder Schaltfinger (20) einem der Schaltglieder (6) zugeordnet und so angeordnet ist, dass er in einer bestimmten Wähldrehstellung der Schaltwelle (2) mit seinem zugeordneten Schaltglied (6) axial gekoppelt ist, um das Schaltglied (6) bei einer Axialbewegung der Schaltwelle (2) mitzunehmen, und
- einer Sperreinrichtung (8-16, 22) zum Verhindern, dass zwei oder mehr Gänge des Getriebes gleichzeitig geschaltet werden, die eine Mehrzahl von gehäusefest gelagerten einzelnen Sperrelementen (12) aufweist, wobei die Sperrelemente (12) jeweils zwischen einem zugeordneten Schaltglied (6) und einem mit der Schaltwelle (2) fest verbundenen Sperrglied (22) wirken,
**dadurch gekennzeichnet, dass**
- die Sperrelemente (12) an einer an einem Gehäuse des Getriebes Festlegbaren Trägerschiene (8) in einer Richtung quer zur Erstreckung der Schaltwelle (2) beweglich gelagert sind, wobei die Sperrelemente (12) an der Trägerschiene (8) elastisch vorgespannt gelagert sind.

2. Schalteinrichtung nach Anspruch 1, **dadurch gekennzeichnet, dass** ein Schaltfinger (20) und ein zugeordnetes Sperrglied (22) jeweils durch ein einzelnes, an der Schaltwelle (2) festgelegtes Koppelglied (4) gebildet sind.

3. Schalteinrichtung nach Anspruch 1 oder 2, **dadurch gekennzeichnet, dass** die Sperrglieder (22) sich jeweils von der Schaltwelle (2) in die dem zugeordneten Schaltfinger (20) entgegengesetzte Richtung erstrecken.

4. Schalteinrichtung nach Anspruch 1, **dadurch gekennzeichnet, dass** die Sperrelemente (12) jeweils mit einer Feder (10) verbunden sind, die an der Trägerschiene (8) angreifen.

5. Schalteinrichtung nach einem der Ansprüche 1-4, **dadurch gekennzeichnet, dass** die Sperrelemente (12) an ihren Enden jeweils an einer Kontur (14) des zugeordneten Schaltgliedes (6) bzw. an einer Kontur (32) des zugeordneten Sperrgliedes (22) angreifen, wobei die Konturen (14, 32) so aufeinander abgestimmt sind, dass die Sperrelemente (12) die jeweils nicht angewählten Schaltglieder (6) axial formschlüssig fixieren.

6. Schalteinrichtung nach einem der Ansprüche 1-5, **dadurch gekennzeichnet, dass** die Schaltglieder (6) jeweils einen Gabelabschnitt mit einem ersten Arm (24) und einem zweiten Arm (26) aufweisen, dass jeweils der erste Arm (24) mit dem zugeordneten Schaltfinger (20) axial formschlüssig koppelbar ist, und dass die Sperrelemente (12) jeweils zwischen dem zweiten Arm (24) des Schaltgliedes (6) und dem Sperrglied (22) wirken.

7. Schalteinrichtung nach Anspruch 1, **dadurch gekennzeichnet, dass** die Schaltglieder (6) jeweils eine im Längsschnitt W-förmige Rastkontur (14) aufweisen, die drei Rastvertiefungen für eine Mittelstellung sowie zwei Schaltstellungen für zwei Schaltkupplungen eines Synchronpaketes beinhaltet, wobei eine Blattfeder (10) die Sperrelemente (12) von der Schaltwelle (2) weg in die Rastkontur (14) drückt.

## Claims

1. A shift device for an inline transmission, comprising
- a shift shaft (2) which is rotated during selection movements and is offset axially during shift movements,
- a plurality of shift members (6) each of which being mounted movably or pivotably in the axial direction, for the actuation of at least one assigned shift clutch,
- a plurality of shift fingers (20) which are secured to the shift shaft (2) and extend in each case towards one side, each shift finger (20) being assigned to one of the shift members (6) and being arranged in such a way that, in a defined rotary selection position of the shift shaft (2), the shift finger is coupled axially to its assigned shift member (6), in order to drive the shift member (6) during an axial movement of the shift shaft (2), and
- a blocking device (8-16, 22) for preventing two or more gears of the transmission from being shifted simultaneously, the said blocking device having a plurality of individual blocking elements (12) mounted fixedly with respect to the casing,
wherein the blocking elements (12) each act between an assigned shift member (6) and a blocking member (22) connected fixedly to the shift shaft (2),
**characterized in that**
the blocking elements (12) are mounted on a carrier rail (8) securable to a casing of the transmission so as to be movable in a direction transverse to the extent of the shift shaft (2), wherein the blocking elements (12) are mounted, prestressed elastically, on the carrier rail (8).

2. The shift device according to claim 1, **characterized in that** a shift finger (20) and an assigned blocking member (22) are formed in each case by an individual coupling member (4) secured to the shift shaft (2).

3. The shift device according to claim 1 or 2, **characterized in that** the blocking members (22) each extend from the shift shaft (2) in the direction opposite to the assigned shift finger (20).

4. The shift device according to claim 1, **characterized in that** the blocking elements (12) each are connected to a spring (10), the springs engaging on the carrier rail (8).

5. The shift device according to one of claims 1-4, **characterized in that** the blocking elements (12) each engage at their ends on a contour (14) of the assigned shift member (6) and on a contour (32) of the assigned blocking member (22), respectively, the contours (14, 32) are being matched to each other in such a way that the blocking elements (12) positively fix axially those shift members (6) which are not selected.

6. The shift device according to one of claims 1-5, **characterized in that** the shift members (6) each have a fork portion with a first arm (24) and with a second arm (26), **in that** in each case the first arm (24) can be positively coupled axially to the assigned shift finger (20), and **in that** the blocking elements (12) each act between the second arm (24) of the shift member (6) and the blocking member (22).

7. The shift device according to claim 1, **characterized in that** the shift members (6) each comprise a latching contour (14) which is approximately W-shaped in longitudinal section and comprises three latching depressions for a middle position and two shift positions for two shift clutches of a synchronizing assembly, wherein the blocking elements (12) are pressed by a leaf spring (10) away from the shift shaft (2) into the latching contour (14).

## Revendications

1. Dispositif de commande pour une boîte de vitesses conçue en mode de construction longitudinal, comportant
- un arbre de levier de changement de vitesse (2), qui est entraîné en rotation lors des mouvements de sélection de vitesse et qui est déplacé dans le sens axial lors des mouvements de changement de vitesse,
- une pluralité d'organes de manoeuvre (6) qui sont montés chacun de manière à se déplacer dans le sens axial ou à pivoter en vue d'actionner au moins un embrayage associé,
- une pluralité de doigts de manoeuvre (20) qui sont fixés sur l'arbre de levier de vitesse (2) et qui s'étendent chacun vers un côté, chaque doigt de manoeuvre (20) étant associé à un organe de manoeuvre (6) et étant disposé de telle sorte que, dans une position de sélection déterminée de l'arbre du levier de vitesse (2), il est couplé axialement avec son organe de manoeuvre (6) associé, afin d'entraîner l'organe de manoeuvre (6) lors d'un mouvement axial de l'arbre de levier de vitesse (2), et
- un dispositif de blocage (8-16, 22), qui est destiné à empêcher que deux rapports ou plus de la boîte de vitesses soient engagés en même temps et qui comporte une pluralité d'éléments de blocage (12) séparés, montés solidaires du carter, les éléments de blocage (12) agissant chacun entre un organe de manoeuvre (6) et un organe de blocage (22) relié fermement à l'arbre de levier de vitesse (2),
**caractérisé en ce que**
- les éléments de blocage (12) sont montés, de manière mobile dans une direction perpendiculaire à l'extension de l'arbre de levier de vitesse (2), sur un rail support (8) pouvant être fixé sur un carter de la boîte de vitesses, les éléments de blocage (12) étant montés sous précontrainte élastique sur le rail support (8).

2. Dispositif de commande selon la revendication 1, **caractérisé en ce qu'**un doigt de manoeuvre (20) et un organe de blocage (22) associé sont formés respectivement par un organe de couplage (4) individuel fixé sur l'arbre de levier de vitesse (2).

3. Dispositif de commande selon la revendication 1 ou 2, **caractérisé en ce que** les organes de blocage (22) s'étendent chacun depuis l'arbre de levier de vitesse (2) dans la direction opposée au doigt de manoeuvre (20) associé.

4. Dispositif de commande selon la revendication 1, **caractérisé en ce que** les éléments de blocage (12) sont reliés chacun à un ressort (10), qui vient s'appliquer sur le rail de support (8).

5. Dispositif de commande selon l'une quelconque des revendications 1 à 4, **caractérisé en ce que** les éléments de blocage (12) viennent s'appliquer chacun au niveau de leurs extrémités sur un contour (14) de l'organe de manoeuvre (6) associé ou sur un contour (32) de l'organe de blocage (22) associé, les contours (14, 32) étant ajustés l'un à l'autre de telle sorte que les éléments de blocage (12) bloquent par conjugaison de forme dans le sens axial respectivement les organes de manoeuvre (6) non sélectionnés.

6. Dispositif de commande selon l'une quelconque des revendications 1 à 5, **caractérisé en ce que** les organes de manoeuvre (6) comportent chacun une partie fourchue avec un premier bras (24) et un deuxième bras (26), **en ce que** respectivement le premier bras (24) peut être couplé par conjugaison de forme dans le sens axial avec le doigt de manoeuvre (20) associé, et **en ce que** les éléments de blocage (12) agissent respectivement entre le deuxième bras (26) de l'organe de manoeuvre (6) et l'organe de blocage (22).

7. Dispositif de commande selon la revendication 1, **caractérisé en ce que** les organes de manoeuvre (6) comportent chacun un contour d'arrêt (14) en forme de W sur une coupe longitudinale, qui comporte trois creux d'arrêt pour une position médiane, ainsi que deux positions de commande pour deux embrayages d'un bloc de synchroniseur, un ressort à lame (10) poussant les éléments de blocage (12) dans le contour d'arrêt (14) en les écartant de l'arbre de levier de vitesse (2).
